# EUROPÄISCHE PATENTSCHRIFT

(11) **EP 2 287 492 B1**
(45) Veröffentlichungstag und Bekanntmachung des Hinweises auf die Patenterteilung: **21.03.2012**
(21) Anmeldenummer: 09168192.4
(22) Anmeldetag: 19.08.2009
(51) Int. Cl.: F16F 9/06

(54) **Hydropneumatischer Kolbenspeicher**
Hydro-pneumatic piston accumulator
Stockeur de piston hydropneumatique

(43) Veröffentlichungstag der Anmeldung: 23.02.2011
(73) Patentinhaber: HEMSCHEIDT FAHRWERKTECHNIK GmbH & Co. KG, 42781 Haan-Gruiten (DE)
(72) Erfinder: Runkel, Walter, 53547 Leubsdorf (DE)
(74) Vertreter: Patentanwälte Dr. Solf & Zapf

(56) Entgegenhaltungen:
- EP-A1- 1 588 939
- EP-A2- 1 000 782
- DE-A1- 3 613 677
- DE-A1- 3 839 446
- DE-U1- 9 002 419
- DE-U1-202004 005 623

## Beschreibung

Die vorliegende Erfindung betrifft einen hydropneumatischen Kolbenspeicher, insbesondere für Fahrzeug-Federungssysteme, bestehend aus einem Speichergehäuse und einem in dem Speichergehäuse schwimmend, frei in Richtung einer Bewegungsachse verschiebbar geführten Trennkolben, der einen Speicherraum für ein hydraulisches Medium von einem mit einem kompressiblen Medium gefüllten oder zu füllenden Druckraum trennt.

In Fahrzeug-Federungssystemen haben hydropneumatische Druckspeicher die Aufgabe, als pneumatische Feder Energie zu speichern und sie bei Bedarf wieder abzugeben. Hierzu wirkt in der Regel ein Teleskop-Federzylinder über ein hydraulisches Medium mit dem Druckspeicher zusammen. Bei Einfederungsbewegungen des Federzylinders wird über das verdrängte hydraulische Medium das kompressible Medium, insbesondere ein Gas, innerhalb des Druckspeichers komprimiert, so dass der Druck des kompressiblen Mediums ansteigt. Dieser erhöhte Druck dient dann wieder zur Rückverdrängung des hydraulischen Mediums zum Ausfedern des Federzylinders. Ein sich einstellender statischer Druck des kompressiblen Mediums bewirkt über den Federzylinder eine die jeweilige Last abstützende Tragkraft.

Es sind verschiedene Speicher-Bauarten bekannt. So kann beispielsweise das hydraulische Medium unmittelbar (ohne Trennwand) insbesondere gegen ein Gas wirken. Bei derartigen Speichern ohne Trennwand ist von Vorteil, dass keine Reibungskraft vorhanden und daher die Hysterese klein ist. Nachteilig ist aber, dass mit zunehmender Betriebsdauer das Gas von der Druckflüssigkeit absorbiert wird. Deshalb ist es zweckmäßig, das hydraulische Medium und das kompressible Medium durch eine bewegliche Trennwand voneinander zu trennen. Die Trennwand kann als Blase, Membran oder als verschiebbarer Trennkolben ausgebildet sein.

Membran- oder Blasenspeicher haben den Nachteil, dass die flexible, insbesondere aus Kunststoff bestehende Trennwand (Kunststoffhaut) bei tiefen Temperaturen spröde wird und hierdurch beschädigt werden kann.

Deshalb werden häufig Kolbenspeicher der eingangs beschriebenen, gattungsgemäßen Art verwendet. Ein derartiger Kolbenspeicher ist beispielsweise durch die Veröffentlichung DE 36 13 677 A1 bekannt. Es handelt sich um eine integrierte Ausführung, wobei der Trennkolben innerhalb einer hohlen Kolbenstange eines Federzylinders angeordnet ist. Demnach wird hier das Speichergehäuse von der hohlen Kolbenstange gebildet.

Eine ähnliche Ausführung ist auch in der DE 38 39 446 A1 beschrieben.

Ein weiterer hydropneumatischer Kolbenspeicher ist in der DE 90 02 419 U1 beschrieben. Es handelt sich um eine recht spezielle Ausführung als Druckwandler, wobei der Trennkolben mit zwei unterschiedlich großen wirksamen Druckflächen ausgebildet ist.

Bei Kolbenspeichern der gattungsgemäßen Art besteht der Nachteil, dass der Trennkolben mit relativ großer Baulänge ausgebildet sein muss, um innerhalb des Speichergehäuses eine kippfreie Führung zu erreichen. Konkret muss der Trennkolben zumindest eine Länge aufweisen, die etwa seinem Durchmesser entspricht. Ist die Länge des Trennkolbens wesentlich kürzer als sein Durchmesser, so kann der Trennkolben innerhalb des Speichergehäuses verkanten und klemmen. Dieser Effekt ist als "Schubladeneffekt" bekannt. Die recht große Länge des Trennkolbens ist insbesondere beim Gegenstand der DE 36 13 677 A1 deutlich zu erkennen.

Der vorliegenden Erfindung liegt die Aufgabe zu Grunde, einen Kolbenspeicher der genannten Art so zu verbessern, dass er mit kurzer, kompakter Baulänge ausgebildet sein kann, aber dennoch gute Gebrauchseigenschaften gewährleistet.

Erfindungsgemäß wird dies gemäß dem unabhängigen Anspruch 1 dadurch erreicht, dass der Trennkolben mit einer inneren Führungsöffnung auf einem länglichen, axial innerhalb des Speichergehäuses befestigten Führungselement geführt ist. Das Führungselement ist zweckmäßig mit einem kreisförmigen Querschnitt ausgebildet und zentrisch entsprechend der Bewegungsachse des Trennkolbens angeordnet. Da das Führungselement einen geringen Durchmesser aufweist, der wesentlich kleiner als der Außendurchmesser des Trennkolbens ist, kann auch die effektive Führungslänge der inneren Führungsöffnung wesentlich kürzer sein. Auch hier gilt, dass die Führungslänge etwa dem Durchmesser der Führungsöffnung bzw. des Führungselementes entspricht.

Erfindungsgemäß ist somit der Trennkolben zweifach innerhalb des Speichergehäuses geführt, und zwar einerseits in seinem äußeren Umfangsbereich, in dem er eine äußere Umfangsdichtung zur Abdichtung eines umfangsgemäßen Ringspaltes zu einer zylindrischen Innenwandung des Speichergehäuses hin aufweist, und andererseits im Bereich der inneren Führungsöffnung über das stangenförmige Führungselement. Hierbei ist weiterhin erfindungsgemäß vorgesehen, dass die äußere Führung und die erfindungsgemäße innere Führung in axialer Richtung gegeneinander versetzt angeordnet sind. Dies wird dadurch erreicht, dass die Führungsöffnung im Bereich eines von dem relativ flach, scheibenartig ausgebildeten Trennkolben axial vorstehenden, hohlzylindrischen Führungsansatzes angeordnet ist. In weiterer bevorzugter Ausgestaltung kann dabei die Führungsöffnung von einer innerhalb des Führungsansatzes sitzenden, das Führungselement umschließenden Führungsbuchse gebildet sein.

Weitere vorteilhafte Ausgestaltungsmerkmale der Erfindung sind in den abhängigen Ansprüchen sowie der nachfolgenden Beschreibung enthalten.

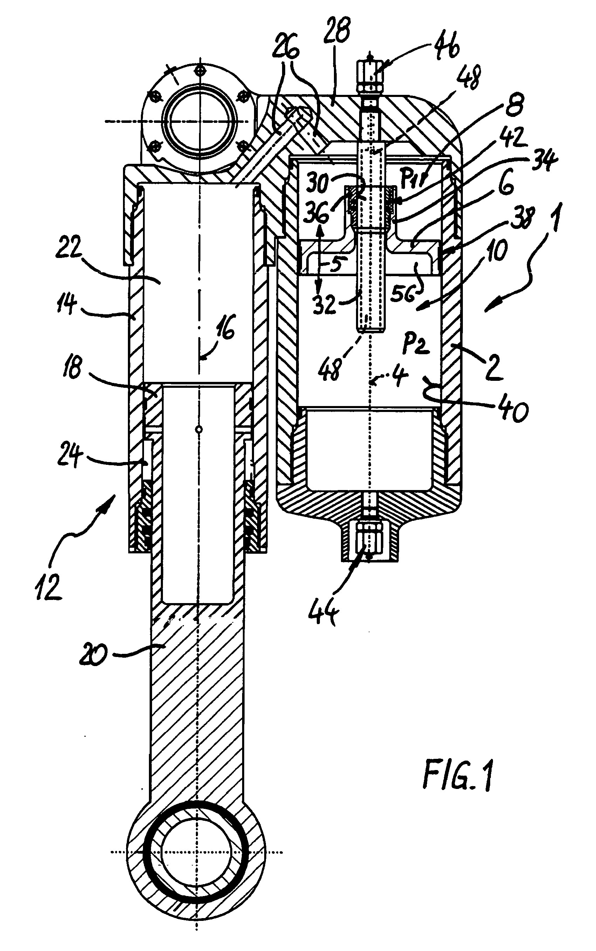

Anhand von einigen in der Zeichnung dargestellten bevorzugten Ausführungsbeispielen soll die Erfindung genauer erläutert werden. Dabei zeigt jede der Figuren 1 bis 4 eine Ausführungsform des erfindungsgemäßen Kolbenspeichers im Axialschnitt in einer bevorzugten Kombination mit einem ebenfalls längsgeschnittenen Federzylinder.

Hierbei sind in den verschiedenen Figuren der Zeichnung gleiche Teile stets mit den gleichen Bezugszeichen versehen.

Wie sich aus jeder der Zeichnungsfiguren 1 bis 4 ergibt, besteht ein erfindungsgemäßer hydropneumatischer Kolbenspeicher 1 aus einem zylindrischen Speichergehäuse 2 und einem darin schwimmend, d. h. frei in Richtung einer Bewegungsachse (Speicher-Längsachse 4) in Doppelpfeilrichtung 5 verschiebbar geführten Trennkolben 6. Der Trennkolben 6 trennt innerhalb des Speichergehäuses 2 einen Speicherraum 8 druckdicht von einem Druckraum 10.

Bei der bevorzugten Anwendung für ein Fahrzeug-Federungssystem wirkt der Kolbenspeicher 1 mit (mindestens) einem hydraulischen Teleskop-Federzylinder 12 zusammen. Der Federzylinder 12 besteht aus einem Zylinder 14 und einem darin in Richtung der Zylinder-Längsachse 16 verschiebbaren Kolben 18 mit einer umfangsgemäß abgedichtet aus dem Zylinder 14 nach außen geführten Kolbenstange 20. Der Kolben 18 teilt innerhalb des Zylinders 14 einen Zylinderraum 22 von einem die Kolbenstange 20 umschließenden Ringraum 24 ab. Beide Räume 22, 24 sind mit einem hydraulischen Medium gefüllt, wobei der Federzylinder 12, und zwar insbesondere der Zylinderraum 22, über eine Hydraulikverbindung 26 mit dem ebenfalls mit dem hydraulischen Medium gefüllten Speicherraum 8 des Kolbenspeichers 1 verbunden ist. Das hydraulische Medium innerhalb des Speicherraums 8 steht unter einem Druck p₁. Der über den Trennkolben 6 gegenüberliegende Druckraum 10 ist mit einem kompressiblen Medium gefüllt, welches unter einem Druck p₂ steht. Als kompressibles Medium wird zweckmäßig ein Gas, insbesondere Stickstoff, eingesetzt. Der Trennkolben 6 wird jeweils vom Druck bzw. Volumen der Medien in den Räumen 8, 10 bewegt, bis sich in einer statischen Lage jeweils ein Druck-Gleichgewicht einstellt.

In bevorzugter Ausgestaltung ist das Speichergehäuse 2 des Kolbenspeichers 1 mechanisch mit dem Federzylinder 12 fest verbunden, und zwar insbesondere in einer bezüglich ihrer Längsachsen 4, 16 parallel nebeneinander liegenden Anordnung. Dabei können der Kolbenspeicher 1 einerseits und der Federzylinder 12 andererseits ein gemeinsames, insbesondere einstückiges Gehäuseteil 28 aufweisen, wobei die Hydraulikverbindung 26 von mindestens einem durch das Gehäuseteil 28 verlaufenden Kanal gebildet sein kann. In dieser bevorzugten Ausführung sind somit der Kolbenspeicher 1 und der Federzylinder 12 zu einer gemeinsamen hydropneumatischen Feder-Einheit kombiniert.

Bei dem Kolbenspeicher 1 ist nun erfindungsgemäß vorgesehen, dass der Trennkolben 6 eine innere axiale und zentrische Führungsöffnung 30 aufweist, mit der er auf einem länglichen, stangen- oder stiftförmigen, axial innerhalb des Speichergehäuses 2 befestigten Führungselement 32 axial verschiebbar, aber kippfrei geführt ist. Über dieses Führungselement 32 wird der Trennkolben 6 auch bei kurzer axialer Baulänge hinreichend geführt, um den so genannten "Schubladeneffekt", d. h. ein Verkippen gegen die Längsachse 4, zu vermeiden. Der Trennkolben 6 kann dadurch mit einer kurzen Länge relativ flach und scheibenartig ausgebildet sein.

Vorzugsweise ist die Führungsöffnung 30 im Bereich eines von dem Trennkolben 6 axial vorstehenden, hohlzylindrischen Führungsansatzes 34 angeordnet. Dabei ist es weiterhin zweckmäßig, die Führungsöffnung 30 durch eine gesonderte, das Führungselement umschließende Führungsbuchse 36 zu bilden, die innerhalb des bevorzugt vorgesehenen Führungsansatzes 34 sitzt. Die Führungsbuchse 36 ist in Anpassung an das Führungselement 32 aus einem geeigneten Material derart ausgebildet, dass die axialen Bewegungen des Trennkolbens 6 mit einer geringen Gleitreibung leichtgängig sind.

Der Trennkolben 6 weist jedenfalls eine äußere Umfangsdichtung 38 zur Abdichtung eines umfangsgemäßen Ringspaltes zu einer zylindrischen Innenwandung 40 des Speichergehäuses 2 hin auf. Die äußere Umfangsdichtung 38 kann bevorzugt aus mindestens zwei axial beabstandeten Dichtringen bestehen. Über die äußere Umfangsdichtung 38 wird auch im äußeren Umfangsbereich des Trennkolbens 6 eine Führung innerhalb des Speichergehäuses 2 erreicht. Hierbei ist dieser umfangsgemäße Führungsbereich gegenüber der erfindungsgemäßen inneren Führung im Bereich der das Führungselement 32 umschließenden Führungsöffnung 30 axial versetzt. Dies bewirkt eine besonders effektive Führung des Trennkolbens 6.

Optional kann der Trennkolben 6 auch im Bereich der Führungsöffnung 30 eine innere Umfangsdichtung 42 zur Abdichtung eines Ringspaltes zwischen dem Trennkolben 6 bzw. der Führungsöffnung 30 und dem Führungselement 32 aufweisen. Dies gilt insbesondere für die Ausführung gemäß Fig. 1, bei der sich das Führungselement 32 durch die Führungsöffnung 30 des Trennkolbens 6 erstreckt und bereichsweise im Speicherraum 8 und bereichsweise im Druckraum 10 angeordnet ist. Über die innere Umfangsdichtung 42 und in Kombination damit die äußere Umfangsdichtung 38 wird eine Trennung zwischen Speicherraum 8 und Druckraum 10 erreicht. Die Drücke p₁ und p₂ beaufschlagen hierbei gleich große Druckflächen des Trennkolbens 6, so dass p₁ stets gleich p₂ ist. Auch die innere Umfangsdichtung 42 kann bevorzugt aus mindestens zwei axial beabstandeten Dichtringen bestehen.

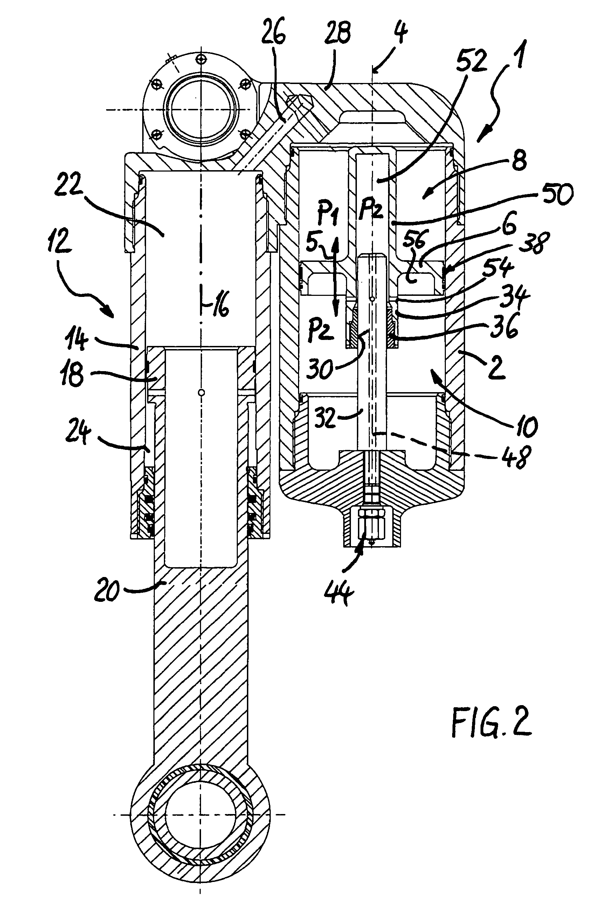

Das Führungselement 32 ist in allen Fällen einendig im Speichergehäuse 2 befestigt und erstreckt sich anderendig frei axial in den Innenraum des Speichergehäuses 2 hinein. Dabei kann die Befestigung wahlweise auf der Seite des Speicherraums 8 (Figuren 1, 3 und 4) oder auf der Seite des Druckraums 10 (Fig. 2) erfolgen.

Bei der Ausführung gemäß Fig. 1 ist das Führungselement 32 beispielhaft nur auf der Seite des Speicherraums 8 befestigt. Zum Befüllen des Druckraums 10 mit dem kompressiblen Medium kann das Speichergehäuse 2 auf der Stirnseite des Druckraums 10 einen Füllanschluss 44 aufweisen, der insbesondere als Füllventil ausgeführt ist. Alternativ oder aber zusätzlich kann ein Füllanschluss 46 auf der gegenüberliegenden Stirnseite des Speichergehäuses 2, also auf der Seite des Speicherraums 8 angeordnet sein, wobei dieser Füllanschluss 46 ebenfalls als Füllventil ausgeführt ist und über einen axial durch das Führungselement 32 verlaufenden Kanal 48 mit dem Druckraum 10 verbunden ist.

Abweichend von Fig. 1 kann das Führungselement 32 auch nur auf der Seite des Druckraums 10 oder aber mit beiden Enden im Speichergehäuse befestigt sein.

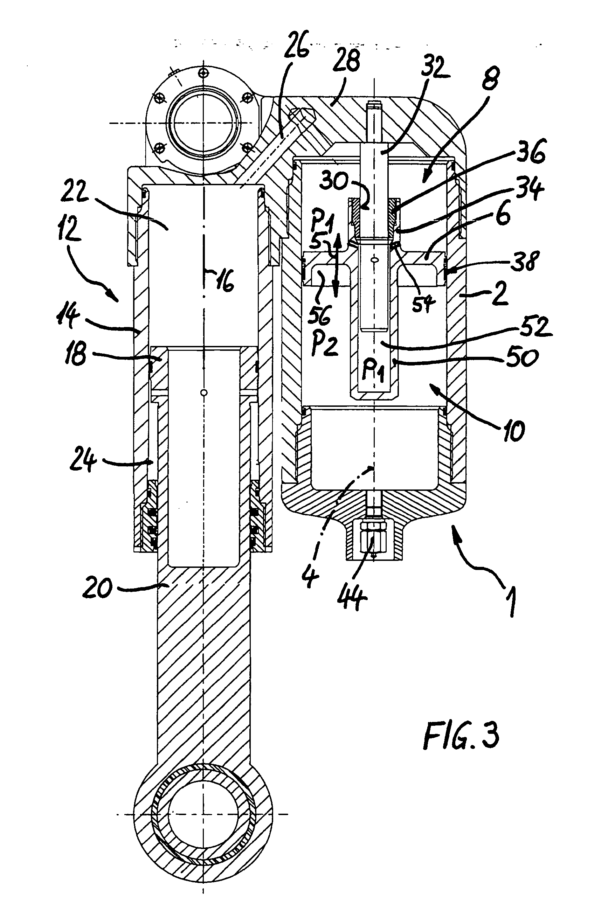

In den bevorzugten Ausführungen gemäß Fig. 2 bis 4 weist der Trennkolben 6 auf seiner dem vorstehenden Führungsansatz 34 axial gegenüberliegenden Seite einen axialen, hohlzylindrischen und endseitig geschlossenen Ansatz 50 mit einem sich an die Führungsöffnung 30 anschließenden, sacklochartigen Hohlraum 52 zur Aufnahme eines freien, durch die Führungsöffnung 30 geführten Endbereiches des Führungselementes 32 auf. Bei den Verschiebungen des Trennkolbens 6 taucht somit das Führungselement 32 mehr oder weniger weit in den Hohlraum 52 ein. Der Hohlraum 52 kann auch als "Tieflochbohrung" bezeichnet werden. Da der von dem Trennkolben 6 ausgehende hohlzylindrische Ansatz 50 endseitig geschlossen ist, ist die innere Umfangsdichtung 42 nicht unbedingt erforderlich, um die Räume 8, 10 voneinander zu trennen. So wird bei den Ausführungsbeispielen gemäß Fig. 2 und 3 auf die innere Umfangsdichtung 42 im Bereich der Führungsöffnung 30 verzichtet.

Bei der Ausführung gemäß Fig. 2, bei der das Führungselement 32 nur einendig auf der Seite des Druckraums 10 befestigt ist, erstreckt sich folglich der Ansatz 50 mit dem Hohlraum 52 in den Speicherraum 8 hinein. Auch hier ist der Füllanschluss 44 über den durch das Führungselement 32 verlaufenden Kanal 48 mit dem Druckraum 10 verbunden. Allerdings mündet hierbei der axial durch das Führungselement 32 bis zu dessen freiem Stirnende verlaufende Kanal 48 in den Hohlraum 52 des Ansatzes 50 des Trennkolbens 6, wobei der Trennkolben 6 mindestens eine von dem Hohlraum 52 ausgehende und in den Druckraum 10 mündende Queröffnung 54 insbesondere im Bereich des hohlzylindrischen Führungsansatzes 34 axial zwischen dem Trennkolben 6 und der Führungsöffnung 30 bzw. der Führungsbuchse 36 aufweist. Somit ist auch der Hohlraum 52 mit dem kompressiblen Medium befüllt, so dass auch hier der gleiche Druck p₂ wirkt. Bei dieser Ausführung wird somit das hydraulische Volumen im Speicherraum 8 verkleinert, während über den Hohlraum 52 das Gesamtvolumen des kompressiblen Mediums des Druckraums 10 vergrößert wird. Daraus resultiert eine relativ flache, weiche Federkennlinie.

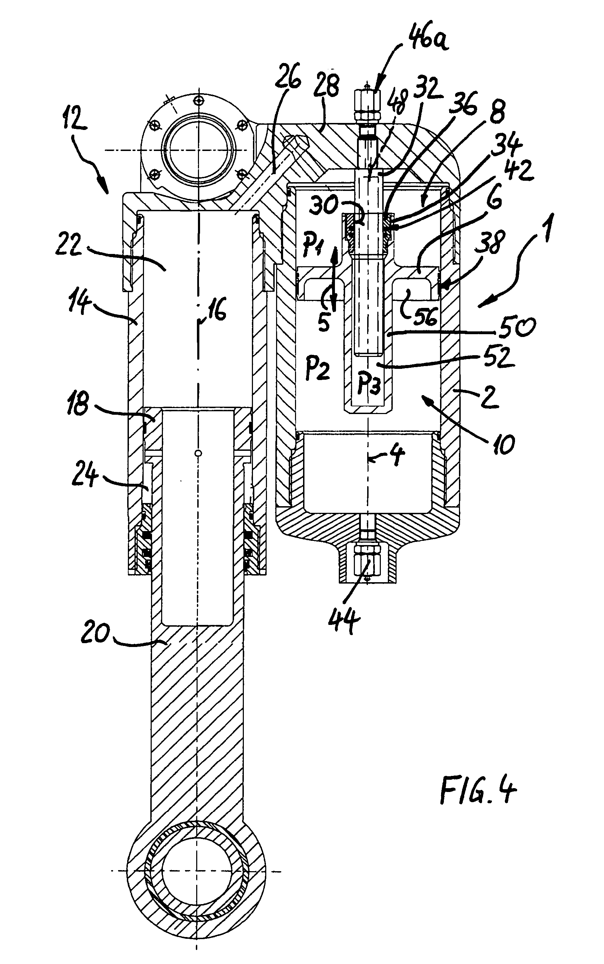

Die Ausführungsformen gemäß Fig. 3 und 4 sind in dieser Hinsicht umgekehrt konzipiert, indem das Führungselement 32 nur einendig auf der Seite des Speicherraums 8 befestigt ist und sich deshalb der Ansatz 50 mit dem Hohlraum 52 in den Druckraum 10 hinein erstreckt. Gemäß Fig. 3 ist hierbei der Hohlraum 52 über mindestens eine Queröffnung 54 des Trennkolbens 6 mit dem Speicherraum 8 verbunden und somit ebenfalls mit dem hydraulischen Medium gefüllt, so dass im Hohlraum 52 ebenfalls der Druck p₁ wirkt. Bei dieser Ausführung ist somit das Gesamtvolumen des kompressiblen Mediums im Druckraum 10 reduziert, woraus eine entsprechend steilere, härtere Federkennlinie resultiert.

Was nun die Ausführung gemäß Fig. 4 betrifft, so ist hierbei der in dem Trennkolben-Ansatz 50 gebildete Hohlraum 52 druckmäßig sowohl von dem Druckraum 10 als auch von dem Speicherraum 8 getrennt. Dazu ist bei dieser Ausführung jedenfalls auch die innere Umfangsdichtung 42 im Bereich der Führungsöffnung 30 notwendig. Zudem ist hier der Hohlraum 52 mit einem kompressiblen Medium gefüllt, wozu ein Füllanschluss (Füllventil) 46a über den axialen Kanal 48 des Führungselementes 32 in den Hohlraum 52 mündet. Hierbei kann innerhalb des Hohlraums 52 ein Druck p₃ eingestellt werden, der sich bei den Bewegungen des Trennkolbens 6 jeweils ändert, weil das Führungselement 32 mit variabler Länge in den Hohlraum 52 eintaucht, wodurch dessen Innenvolumen unter Änderung des Druckes p₃ durch Kompression oder Expansion entsprechend verändert wird. Wie in Fig. 4 gestrichelt dargestellt ist, kann der Kanal 48 des Führungselementes 32 zum freien Ende hin zur Vergrößerung des Innenvolumens erweitert sein. Dies gilt analog auch für die Ausführung nach Fig. 1.

Durch diese Volumenvergrößerung wird bezüglich der Volumenveränderungen des kompressiblen Mediums eine weichere, flachere Kennlinie erreicht. Bei den federungsbedingten Bewegungen des Trennkolbens 6 ändern sich gemäß Fig. 4 die pneumatischen Drücke p₂ im Druckraum 10 und p₃ im Hohlraum 52 gegenläufig, d. h. wenn p₂ durch Kompression steigt, dann sinkt p₃ durch Expansion und umgekehrt. Dabei wirkt p₃ in Richtung des hydraulischen Druckes p₁, also gegen p₂. Daher unterstützt p₃ den hydraulischen Druck p₁; es gilt stets die Gleichung p₂ = p₁ + p₃. Somit kann bei dieser Ausführung gemäß Fig. 4 über die Vorgabe des Druckes p₃ die Gesamt-Federkennlinie beeinflusst werden.

Es ist weiterhin vorteilhaft, wenn der Trennkolben 6 auf der Seite des Druckraums 10 eine dessen Volumen vergrößernde Vertiefung 56 aufweist.

Abschließend sei noch erwähnt, dass in der Hydraulikverbindung 26 zwischen dem Federzylinder 12 und dem Speicherraum 8 des Kolbenspeichers 1 nicht dargestellte Dämpfungsmittel zur Dämpfung der Hydraulikströmung angeordnet sein können. Alternativ oder zusätzlich kann vorgesehen sein, dass der Zylinderraum 22 und der Ringraum 24 des Federzylinders 12 über im Bereich des Kolbens 18 angeordnete und ebenfalls nicht dargestellte Dämpfungsmittel hydraulisch miteinander verbunden sind.

## Patentansprüche

1. Hydropneumatischer Kolbenspeicher (1), insbesondere für Fahrzeug-Federungssysteme, bestehend aus einem Speichergehäuse (2) und einem in dem Speichergehäuse (2) schwimmend, frei in Richtung einer Bewegungsachse (4) verschiebbar geführten Trennkolben (6), der einen Speicherraum (8) für ein hydraulisches Medium von einem mit einem kompressiblen Medium gefüllten oder zu füllenden Druckraum (10) trennt,
wobei der Trennkolben (6) mit einer inneren Führungsöffnung (30) auf einem länglichen, axial innerhalb des Speichergehäuses (2) befestigten Führungselement (32) geführt ist, **dadurch gekennzeichnet, dass** die Führungsöffnung (30) im Bereich eines von dem Trennkolben (6) axial vorstehenden, hohlzylindrischen Führungsansatzes (34) angeordnet ist.

2. Kolbenspeicher nach Anspruch 1,
**dadurch gekennzeichnet, dass** die Führungsöffnung (30) von einer das Führungselement (32) umschließenden Führungsbuchse (36) gebildet ist.

3. Kolbenspeicher nach Anspruch 1 oder 2,
**dadurch gekennzeichnet, dass** der Trennkolben (6) eine äußere Umfangsdichtung (38) zur Abdichtung eines umfangsgemäßen Ringspaltes zu einer zylindrischen Innenwandung (40) des Speichergehäuses (2) hin aufweist.

4. Kolbenspeicher nach einem der Ansprüche 1 bis 3,
**dadurch gekennzeichnet, dass** der Trennkolben (6) im Bereich der Führungsöffnung (30) eine innere Umfangsdichtung (42) zur Abdichtung eines Ringspaltes zwischen dem Trennkolben (6) und dem Führungselement (32) aufweist.

5. Kolbenspeicher nach einem der Ansprüche 1 bis 4,
**dadurch gekennzeichnet, dass** der Trennkolben (6) einen axialen Ansatz (50) mit einem sich an die Führungsöffnung (30) anschließenden sacklochartigen Hohlraum (52) zur Aufnahme eines freien, durch die Führungsöffnung (30) geführten Endbereiches des Führungselementes (32) aufweist.

6. Kolbenspeicher nach einem der Ansprüche 1 bis 5,
**dadurch gekennzeichnet, dass** das Speichergehäuse (2) auf der Seite des Druckraums (10) einen Füllanschluss (44) zum Einfüllen des kompressiblen Mediums aufweist.

7. Kolbenspeicher nach einem der Ansprüche 1 bis 6,
**dadurch gekennzeichnet, dass** das Führungselement (32) einendig auf der Seite des Druckraums (10) im Speichergehäuse (2) befestigt ist.

8. Kolbenspeicher nach Anspruch 6 und 7,
**dadurch gekennzeichnet, dass** der Füllanschluss (44) über einen durch das Führungselement (32) verlaufenden Kanal (48) mit dem Druckraum (10) verbunden ist.

9. Kolbenspeicher nach Anspruch 8,
**dadurch gekennzeichnet, dass** der Kanal (48) axial durch das Führungselement (32) bis zu dessen freiem Stirnende verläuft und in den Hohlraum (52) des Ansatzes (50) des Trennkolbens (6) mündet, wobei der Trennkolben (6) mindestens eine von dem Hohlraum (52) ausgehende und in den Druckraum (10) mündende Queröffnung (54) aufweist.

10. Kolbenspeicher nach einem der Ansprüche 1 bis 6,
**dadurch gekennzeichnet, dass** das Führungselement (32) einendig auf der Seite des Speicherraums (8) im Speichergehäuse (2) befestigt ist.

11. Kolbenspeicher nach Anspruch 10,
**dadurch gekennzeichnet, dass** der in dem Trennkolben-Ansatz (50) gebildete Hohlraum (52) über mindestens eine Queröffnung (54) des Trennkolbens (6) mit dem Speicherraum (8) verbunden ist.

12. Kolbenspeicher nach Anspruch 10,
**dadurch gekennzeichnet, dass** der in dem Trennkolben-Ansatz (50) gebildete Hohlraum (52) mit einem kompressiblen Medium gefüllt oder zu füllen ist und druckmäßig sowohl von dem Druckraum (10) als auch von dem Speicherraum (8) getrennt ist.

13. Kolbenspeicher nach Anspruch 12,
**dadurch gekennzeichnet, dass** das Speichergehäuse (2) auf der Seite des Speicherraums (8) einen Füllanschluss (46a) zum Einfüllen des kompressiblen Mediums in den Trennkolben-Hohlraum (52) aufweist, wobei der Füllanschluss (46a) über einen durch das Führungselement (32) verlaufenden Kanal (48) mit dem Hohlraum (52) verbunden ist.

14. Kolbenspeicher nach Anspruch 13,
**dadurch gekennzeichnet, dass** der Kanal (48) des Führungselementes (32) zum Hohlraum (52) hin zur Vergrößerung des Innenvolumens erweitert ist.

15. Kolbenspeicher nach einem der Ansprüche 1 bis 14,
**dadurch gekennzeichnet, dass** der Speicherraum (8) über eine Hydraulikverbindung (26) mit einem hydraulischen Federzylinder (12) verbunden ist, wobei vorzugsweise das Speichergehäuse (2) mechanisch mit dem Federzylinder (12) fest verbunden ist, und zwar insbesondere in einer bezüglich ihrer Längsachsen (4, 16) parallel nebeneinander liegenden Anordnung.

16. Kolbenspeicher nach Anspruch 15,
**dadurch gekennzeichnet, dass** der Federzylinder (12) als Teleskopzylinder aus einem Zylinder (14) und einem darin verschiebbaren Kolben (18) mit einer nach außen geführten Kolbenstange (20) besteht, wobei der Kolben (18) einen Zylinderraum (22) von einem die Kolbenstange (20) umschließenden Ringraum (24) abteilt, und wobei der Zylinderraum (22) mit dem Speicherraum (8) verbunden ist.

17. Kolbenspeicher nach Anspruch 15 oder 16,
**dadurch gekennzeichnet, dass** in der Hydraulikverbindung (26) zwischen dem Federzylinder (12) und dem Speicherraum (8) Dämpfungsmittel zur Dämpfung der Hydraulikströmung angeordnet sind.

18. Kolbenspeicher nach Anspruch 16 oder 17,
**dadurch gekennzeichnet, dass** der Zylinderraum (22) und der Ringraum (24) - insbesondere über im Bereich des Kolbens (18) angeordnete Dämpfungsmittel - hydraulisch miteinander verbunden sind.

## Claims

1. A hydropneumatic piston accumulator (1), in particular for vehicle suspension systems, consisting of an accumulator housing (2) and a separating piston (6) guided in floating manner in the accumulator housing (2) and which is guided freely displaceably in the direction of a movement axis (4), which piston separates an accumulator space (8) for a hydraulic medium from a pressure space (10) which is filled or is to be filled with a compressible medium, the separating piston (6) is guided with an inner guide opening (30) on an elongate guide element (32) which is fastened axially within the accumulator housing (2), **characterised in that** the guide opening (30) is arranged in the region of a hollow-cylindrical guide projection (34) which projects axially from the separating piston (6).

2. A piston accumulator according to Claim 1,
**characterised in that** the guide opening (30) is formed by a guide bush (36) which surrounds the guide element (32).

3. A piston accumulator according to Claim 1 or 2,
**characterised in that** the separating piston (6) has an outer peripheral seal (38) for sealing a peripheral annular gap from a cylindrical inner wall (40) of the accumulator housing (2).

4. A piston accumulator according to one of Claims 1 to 3,
**characterised in that** the separating piston (6) has in the region of the guide opening (30) an inner peripheral seal (42) for sealing off an annular gap between the separating piston (6) and the guide element (32).

5. A piston accumulator according to one of Claims 1 to 4,
**characterised in that** the separating piston (6) has an axial projection (50) with a blind-hole-like cavity (52) adjoining the guide opening (30) for receiving a free end region of the guide element (32) which is passed through the guide opening (30).

6. A piston accumulator according to one of Claims 1 to 5,
**characterised in that** the accumulator housing (2) has a filling connection (44) for filling with the compressible medium on the side of the pressure space (10).

7. A piston accumulator according to one of Claims 1 to 6,
**characterised in that** the guide element (32) is fastened at one end on the side of the pressure space (10) in the accumulator housing (2).

8. A piston accumulator according to Claims 6 and 7,
**characterised in that** the filling connection (44) is connected to the pressure space (10) via a duct (48) which extends through the guide element (32).

9. A piston accumulator according to Claim 8,
**characterised in that** the duct (48) extends axially through the guide element (32) up to the free end thereof and opens into the cavity (52) of the projection (50) of the separating piston (6), the separating piston (6) having at least one transverse opening (54) which originates from the cavity (52) and opens into the pressure space (10).

10. A piston accumulator according to one of Claims 1 to 6,
**characterised in that** the guide element (32) is fastened at one end on the side of the accumulator space (8) in the accumulator housing (2).

11. A piston accumulator according to Claim 10,
**characterised in that** the cavity (52) formed in the separating-piston projection (50) is connected to the accumulator space (8) via at least one transverse opening (54) of the separating piston (6).

12. A piston accumulator according to Claim 10,
**characterised in that** the cavity (52) formed in the separating-piston projection (50) is filled or is to be filled with a compressible medium and is separated in terms of pressure both from the pressure space (10) and from the accumulator space (8).

13. A piston accumulator according to Claim 12,
**characterised in that** the accumulator housing (2) on the side of the accumulator space (8) has a filling connection (46a) for filling the compressible medium into the separating-piston cavity (52), the filling connection (46a) being connected to the cavity (52) via a duct (48) extending through the guide element (32).

14. A piston accumulator according to Claim 13,
**characterised in that** the duct (48) of the guide element (32) is widened towards the cavity (52) in order to enlarge the internal volume.

15. A piston accumulator according to one of Claims 1 to 14,
**characterised in that** the accumulator space (8) is connected via a hydraulic connection (26) to a hydraulic spring cylinder (12), with preferably the accumulator housing (2) being securely connected mechanically to the spring cylinder (12), namely in particular in an arrangement parallel next to one another with respect to their longitudinal axes (4, 16).

16. A piston accumulator according to Claim 15,
**characterised in that** the spring cylinder (12) as a telescopic cylinder consists of a cylinder (14) and a piston (18) which is displaceable therein with a piston rod (20) guided to the outside, the piston (18) separating a cylinder space (22) from an annular space (24) surrounding the piston rod (20), and the cylinder space (22) being connected to the accumulator space (8).

17. A piston accumulator according to Claim 15 or 16,
**characterised in that** damping means for damping the hydraulic flow are arranged in the hydraulic connection (26) between the spring cylinder (12) and the accumulator space (8).

18. A piston accumulator according to Claim 16 or 17,
**characterised in that** the cylinder space (22) and the annular space (24) are hydraulically connected together, in particular via damping means arranged in the region of the piston (18).

## Revendications

1. Accumulateur à piston (1) hydropneumatique, en particulier pour des systèmes de suspension de véhicule, comprenant un boîtier d'accumulateur (2) et un piston séparateur (6) guidé de façon flottante dans le boîtier d'accumulateur (2) et de façon librement coulissante en direction d'un axe de déplacement (4), lequel piston sépare un espace d'accumulateur (8) pour un fluide hydraulique d'un espace de pression (10) rempli ou à remplir avec un fluide compressible, dans lequel le piston séparateur (6) est guidé avec une ouverture de guidage (30) intérieure sur un élément de guidage (32) allongé et fixé axialement à l'intérieur du boîtier d'accumulateur (2),
**caractérisé en ce que** l'ouverture de guidage (30) est disposée dans la zone d'une embase de guidage (34) cylindrique creuse, dépassant axialement du piston séparateur (6).

2. Accumulateur selon la revendication 1,
**caractérisé en ce que** l'ouverture de guidage (30) est formée par une douille de guidage (36) entourant l'élément de guidage (32)

3. Accumulateur à piston selon la revendication 1 ou 2,
**caractérisé en ce que** le piston à accumulateur (6) présente un joint périphérique (38) extérieur pour l'étanchéité d'une fente annulaire périphérique en direction d'une paroi intérieure (40) cylindrique du boîtier d'accumulateur (2).

4. Accumulateur à piston selon l'une quelconque des revendications 1 à 3,
**caractérisé en ce que** le piston séparateur (6) présente dans la zone de l'ouverture de guidage (30) un joint périphérique (42) intérieur pour l'étanchéité d'une fente annulaire entre le piston séparateur (6) et l'élément de guidage (32).

5. Accumulateur à piston selon l'une des revendications 1 à 4,
**caractérisé en ce que** le piston séparateur (6) présente une embase (50) axiale avec une cavité (52) de type trou borgne, se raccordant à l'ouverture de guidage (30), pour le logement d'une zone d'extrémité libre, guidée à travers l'ouverture de guidage (30), de l'élément de guidage (32).

6. Accumulateur à piston selon l'une des revendications 1 à 5,
**caractérisé en ce que** le boîtier d'accumulateur (2) présente sur le côté de l'espace de pression (10) un branchement de remplissage (44) pour le remplissage par du fluide compressible.

7. Accumulateur à piston selon l'une des revendications 1 à 6,
**caractérisé en ce que** l'élément de guidage (32) est fixé par une extrémité sur le côté de l'espace de pression (10) dans le boîtier d'accumulateur (2).

8. Accumulateur selon les revendications 6 et 7,
**caractérisé en ce que** le branchement de remplissage (44) est relié à l'espace de pression (10) par un canal (48) s'étendant à travers l'élément de guidage (32).

9. Accumulateur à piston selon la revendication 8,
**caractérisé en ce que** le canal (48) s'étend axialement à travers l'élément de guidage (32) jusqu'à son extrémité avant libre et débouche dans la cavité (52) de l'embase (50) du piston séparateur (6), le piston séparateur (6) présentant au moins une ouverture transversale (54) partant de la cavité (52) et débouchant dans l'espace de pression (10).

10. Accumulateur à piston selon l'une des revendications 1 à 6, **caractérisé en ce que** l'élément de guidage (32) est fixé par une extrémité sur le côté de l'espace d'accumulateur (8) dans le boîtier d'accumulateur (2).

11. Accumulateur à piston selon la revendication 10,
**caractérisé en ce que** la cavité (52) formée dans l'embase du piston séparateur (50) est reliée à l'espace d'accumulateur (8) par au moins une ouverture transversale (54) du piston séparateur (6).

12. Accumulateur à piston selon la revendication 10,
**caractérisé en ce que** la cavité (52) formée dans l'embase du piston séparateur (50) est remplie ou doit être remplie avec un fluide compressible et est séparée au niveau pression aussi bien de l'espace pression (10) que de l'espace accumulateur (8).

13. Accumulateur à piston selon la revendication 12,
**caractérisé en ce que** le boîtier d'accumulateur (2) présente sur le côté de l'espace d'accumulateur (8) un branchement de remplissage (46a) pour le remplissage de la cavité du piston séparateur (52) par du fluide compressible, le branchement de remplissage (46a) étant relié à la cavité (52) par un canal (48) agencé à travers l'élément de guidage (32).

14. Accumulateur à piston selon la revendication 13,
**caractérisé en ce que** le canal (48) de l'élément de guidage (32) est élargi en direction de la cavité (52) pour l'agrandissement du volume intérieur.

15. Accumulateur à piston selon l'une des revendications 1 à 14,
**caractérisé en ce que** l'espace d'accumulateur (8) est relié par une liaison hydraulique (26) à un cylindre à ressort (12) hydraulique, le boîtier d'accumulateur (2) étant relié de préférence de façon fixe au plan mécanique au cylindre à ressort (12), et ce en particulier dans un agencement juxtaposé en parallèle par rapport à ses axes longitudinaux (4, 16).

16. Accumulateur à piston selon la revendication 15,
**caractérisé en ce que** le cylindre à ressort (12) sous forme de vérin télescopique comprend un cylindre (14) et un piston (18) coulissant dedans avec une tige de piston (20) guidée vers l'extérieur, dans lequel le piston (18) sépare un espace de cylindre (22) d'un espace annulaire (24) entourant la tige de piston (20), et dans lequel l'espace de cylindre (22) est relié à l'espace d'accumulateur (8).

17. Accumulateur à piston selon la revendication 15 ou 16,
**caractérisé en ce que** des moyens d'amortissement pour l'amortissement du flux hydraulique sont disposés dans la liaison hydraulique (26) entre le cylindre à ressort (12) et l'espace d'accumulateur (8).

18. Accumulateur à piston selon la revendication 16 ou 17,
**caractérisé en ce que** l'espace de cylindre (22) et l'espace annulaire (24) sont reliés hydrauliquement l'un à l'autre - en particulier par des moyens d'amortissement disposés dans la zone du piston (18).
